# EUROPÄISCHE PATENTSCHRIFT

(11) **EP 0 683 021 B1**
(45) Veröffentlichungstag und Bekanntmachung des Hinweises auf die Patenterteilung: **28.07.1999**
(21) Anmeldenummer: 95107459.0
(22) Anmeldetag: 17.05.1995
(51) Int. Cl.: B27C 5/06, B23Q 11/00, B23Q 3/00

(54) **Arbeitsvorrichtung für Fräsmaschinen**
Apparatus for milling machines
Installation pour machines à fraiser

(30) Priorität: 18.05.1994 DE 4417306; 18.05.1994 DE 4417378; 18.05.1994 DE 4417377
(43) Veröffentlichungstag der Anmeldung: 22.11.1995
(73) Patentinhaber: SCHWEIZERISCHE UNFALLVERSICHERUNGSANSTALT SUVA, CH-6001 Luzern (CH)
(72) Erfinder: Leupi, Hans, CH 6253 Uffikon (CH); Wirz, Hansjürg, CH 6023 Rothenburg (DE)
(74) Vertreter: Gustorf, Gerhard, Dipl.-Ing.

(56) Entgegenhaltungen:
- WO-A-93/23199
- DE-A- 3 142 513
- DE-A- 3 634 199
- DE-C- 470 509
- DE-C- 4 305 356
- DE-U- 9 108 068
- PATENT ABSTRACTS OF JAPAN vol. 4 no. 164 (M-41) [646] ,14.November 1980 & JP-A-55 112746 (HIROSHI IKETANI) 30.August 1980,
- SOVIET ENGINEERING RESEARCH (STANKI I INSTRUMENTY & VESTNIK MASHINOSTROENIA MASHINOSTROCNIE)., Bd. 11, Nr. 6, 1991 NEW YORK US, Seiten 15-17, XP 000239585 POPOV ET AL 'Differential Drum as an Element in an Industrial Robot Balancing Mechanism'

## Beschreibung

Die Erfindung betrifft eine Arbeitsvorrichtung für Fräsmaschinen zum Bearbeiten von Werkstücken aus Holz nach dem Oberbegriff des Patentanspruchs 1.

Unter der Bezeichnung SUVA-Kehlschutzapparat ist eine Schutz- und Führungsvorrichtung bekannt und seit langem mit Erfolg im Einsatz, bei der der Schwenkarm über eine Parallelogrammführung an einer Lagerplatte angelenkt ist, die ihrerseits schwenkbar an der Tragsäule gelagert ist. Von der Oberseite der Lagerplatte steht eine Blattfeder ab, die über eine vertikale Spindel auf den Schwenkarm einen Druck ausübt, der durch eine Druckregulierschraube eingestellt werden kann. Am freien Ende des Schwenkarms ist ein Werkzeugträger befestigt, an dem über jeweils zwei Vertikalstangen ein Druckschuh und eine Verdeckung befestigt sind.

Eine Arbeitseinrichtung der im Patentanspruch 1 angegebenen Gattung ist aus der DE-U 17 79 569 bekannt. Bei dieser Arbeitsvorrichtung mit angebautem Druckorgan handelt es sich um einen Vorschubapparat, der gegen Federkraft über eine Handkurbel höhenverschiebbar gelagert ist, um eine Einzelfederung der Vorschubrollen überflüssig zu machen. Der horizontale Schwenkarm ist an einer Ständersäule angebracht und so gelagert, daß er in Längsrichtung verstellt werden kann. Am vorderen Ende des Schwenkarmes ist der Vorschubapparat befestigt, und zwar in einem Klemmring, der über einen Halter mit einem senkrechten Zapfen verbunden ist, welcher seinerseits in einem Schlitten befestigt ist. Der Schlitten ist über eine Schwalbenschwanzführung in einem Kopf vertikal verstellbar gelagert, wobei der Kopf am Ende des Schwenkarmes gehalten ist.

Der Erfindung liegt die Aufgabe zugrunde, eine Arbeitsvorrichtung für Fräsmaschinen zur Verfügung zu stellen, die bei Tischfräsmaschinen universelle Einsatzmöglichkeiten für die Ausführung aller Fräsarbeiten bietet und mit geringstmöglichem Raumbedarf eingesetzt werden kann.

Nach dem Kennzeichen des Patentanspruchs 1 wird diese Aufgabe erfindungsgemäß dadurch gelöst, daß die Vertikalführung nach oben und unten frei verschiebbar gelagert ist, Mittel zur Gewichtsentlastung der angebauten Organe aufweist und an ihrem unteren Ende eine Adaptereinrichtung zum auswechselbaren Anbau von Führungsorganen, Schutzorganen und Druckorganen trägt, die einen Querführungsblock aufweist, in dem eine horizontal frei verschiebbare Tragstange für die anzubauenden Organe gelagert ist.

Die vertikal nach oben und unten freie Verschiebbarkeit der an die Vertikalführung angebauten Adaptereinrichtung gestattet eine äußerst rasche Anpassung der Arbeitsvorrichtung an die Bearbeitungsbedingungen, wobei einerseits die Gewichtsentlastung eine bequeme Bedienung sichert und andererseits eine gewünschte vertikale Andruckkraft eingestellt werden kann, um das Werkstück optimal zu bearbeiten. Die Adaptereinrichtung mit Querführungsblock und darin horizontal frei verschiebbarer Tragstange ermöglicht einen raschen Wechsel und Anbau der jeweils benötigten Organe - Führungsorgane, Schutzorgane, Druckorgane -, wobei die frei verschiebbare Tragstange zu einer raschen und einfachen Positionierung beiträgt.

Dadurch, daß die Mittel zur Druckerzeugung unmittelbar am freien Ende des Schwenkarms vorgesehen sind und dort auf die Vertikalführung wirken, ist der Bauraum im Bereich der Tragsäule auf ein Mindestmaß beschränkt, so daß der dort gewonnene Platz in der Höhe für andere Zwecke verwendet werden kann, beispielsweise zum Anbringen eines ausschwenkbaren Steuerpultes für die Tischfräsmaschine.

Bei einer Weiterbildung der Erfindung ist vorgesehen, daß an der Tragsäule zusätzlich ein horizontal abstehender Teleskoparm unabhängig von dem Schwenkarm schwenkbar gelagert ist, der an seinem freien Ende eine vertikal verstellbare Haltestange für die Aufnahme einer auf dem Maschinentisch fixierbaren Führungsvorrichtung aufweist. Bei dieser Führungsvorrichtung kann es sich beispielsweise um ein Kreuztischsystem handeln, das Gegenstand der EP 95 10 2182.3 ist.

Nach einem anderen Merkmal der Erfindung besteht die Vertikalführung aus zwei parallelen Führungsstangen, die in Kugelbüchsen am freien Ende des Schwenkarmes vertikal frei verschiebbar gelagert sind. Die oberen Enden der beiden Führungsstangen können durch eine Endanschlagplatte miteinander verbunden sein.

Es ist besonders vorteilhaft, wenn der Querführungsblock der Adaptereinrichtung winkeleinstellbar an einer Konsole befestigt ist, die vom unteren Ende der Vertikalführung radial absteht. Auf diese Weise kann die Winkelstellung der angebauten Organe genau eingestellt werden, insbesondere zur Anpassung an die Stellung eines Anschlaglineals.

Die Tragstange kann am Querführungsblock verriegelt werden. Insbesondere beim Einsetzfräsen ist es jedoch von Vorteil, wenn der Querführungsblock Rückführmittel zum automatischen Ausschieben der Tragstange und der angebauten Organe aus der Frässtellung aufweist. Nach dem Einsetzfräsen wird dadurch das angebaute Organ, insbesondere eine das Werkstück kraftschlüssig aufnehmende Klemmeinrichtung, automatisch aus dem Arbeitsbereich des Fräsers herausgeschoben.

Gemäß der Erfindung kann diese Klemmeinrichtung an einer horizontalen Achse hängen, die in einer Längsführung verschiebbar gelagert ist, welche mit der horizontalen Tragstange verbunden ist, die in Richtung auf den Anschlag in der Querführung verschiebbar ist.

Mit dieser Vorrichtung wird das Werkstück in Längsrichtung (x-Richtung) und Querrichtung (y-Richtung) so geführt, daß alle notwendigen Zustell- und Arbeitsbewegungen ausgeführt werden können, ohne daß die Hand der Bedienungsperson über das unbedingt erforderliche Maß hinaus eingreifen muß.

Auf die Tragstange des Querführungsblocks kann auch eine zylindrische Schutzhaube zum Bogenfräsen aufgesetzt werden, die eine vordere Fräsöffnung hat und so ausgebildet ist, daß sie bei maximaler Abdeckung der Fräsöffnung und damit geringstmöglicher Werkzeugfreigabe das Innenfräsen auch kleiner Radien zuläßt, ohne daß beim Ringfräsen die Schutzhaube abmontiert werden muß.

Die Fräsöffnung ist zu diesem Zweck durch zwei an der Schutzhaube angebrachte und von dieser nach unten abstehende, relativ zueinander frei verschiebbare, teilzylindrische Schutzschalen teilweise abdeckbar, die sich unter Freilassung der Fräsöffnung über den ganzen Umfang der zylindrischen Schutzhaube erstrecken, sich im der Fräsöffnung gegenüberliegenden Bereich überlappen und mit ihren oberen Enden an je einem Ring befestigt sind, der vertikal verschiebbar und verdrehbar auf der Außenwand der Schutzhaube gelagert ist.

Damit steht eine Schutzhaube zur Verfügung, die aufgrund ihrer Zylinderform und ihrer Befestigung oberhalb des Maschinentisches eine Arbeitsfreiheit von 360° bietet. Die beiden Schutzschalen decken die Fräsöffnung seitlich maximal ab und geben nur die tatsächlich benötigte Arbeitsöffnung zum Fräsen frei; entsprechend der Führung des zu bearbeitenden, bogenförmigen Werkstücks werden sie durch dieses auf der Schutzhaube um den jeweils erforderlichen Winkel verdreht. Da die Schutzschalen an einem vertikal verschiebbaren Ring angebracht sind, ist es unabhängig von der Höhenlage der Schutzhaube möglich, den Bereich bis zum Maschinentisch hin abzuschließen, was insbesondere dann wesentlich ist, wenn die Schutzhaube an eine Späneabsaugvorrichtung angeschlossen ist.

Um sicherzustellen, daß in jeder Stellung des Werkstücks nur die tatsächlich benötigte Fräsöffnung freibleibt, haben die Schutzschalen im der Fräsöffnung gegenüberliegenden Bereich Rückführmittel, beispielsweise Federn, die dafür sorgen, daß die Schutzschalen immer in ihre Ausgangsstellung zurückgeführt werden, in der die Fräsöffnung die kleinstmögliche Abmessung hat.

Wenn am unteren Rand der Schutzhaube ein Druckring vorgesehen ist, der beispielsweise über einen Bügel an der Oberseite der Schutzhaube befestigt werden kann, wirkt diese als Andruckelement, das eine vertikale Druckkraft auf das zu bearbeitende Werkstück ausübt.

Weitere Merkmale und Vorteile der Erfindung sind Gegenstand der Patentansprüche und ergeben sich aus der folgenden Beschreibung von Ausführungsbeispielen, die in der Zeichnung dargestellt sind. Es zeigen:
Figur 1 die Ansicht einer Arbeitsvorrichtung gemäß der Erfindung mit angebauter Führungsvorrichtung zum Einsetzfräsen,
Figur 2 die Vorderansicht der Vorrichtung,
Figur 3 die Seitenansicht der Vorrichtung,
Figur 4 eine Draufsicht auf die Vorrichtung,
Figur 5 die vergrößerte Draufsicht auf das an der Tragsäule gelagerte Ende des Schwenkarms der Vorrichtung,
Figur 6 die Seitenansicht der Figur 5,
Figur 7 die teilweise geschnittene Vorderansicht des Schwenkarms in Richtung des Pfeiles VII der Figur 6,
Figur 8 eine vergrößerte Ausschnittsdarstellung des in Figur 6 gezeigten Endes des Schwenkarms,
Figur 9 die vergrößerte Darstellung des freien Endes des Schwenkarms mit Vertikalführung,
Figur 10 einen Schnitt in der Ebene X-X der Figur 9,
Figur 11 eine der Figur 1 entsprechende Ansicht eines Teils der Vorrichtung mit anderen am Adapter angebauten Organen,
Figur 12 die Seitenansicht der Vorrichtung der Figur 11,
Figur 13 die Draufsicht der Vorrichtung der Figuren 11 und 12,
Figur 14 eine Variante der Figur 11,
Figur 15 eine weitere Variante,
Figur 16 eine Seitenansicht der Variante der Figur 15,
Figur 17 eine weitere Variante mit an der Adaptereinrichtung angebauter Schutzhaube,
Figur 18 eine Seitenansicht der Figur 17,
Figur 19 eine Draufsicht der Schutzhaube der Figuren 17 und 18,
Figur 20 in vergrößertem Maßstab einen Vertikalschnitt durch die Schutzhaube,
Figur 21 eine Ansicht des oberen Teils der Schutzhaube in Richtung des Pfeiles XXI der Figur 20,
Figur 22 eine Unteransicht der Schutzhaube,
Figur 23 eine den Figuren 11 bis 13 ähnliche Ausführungsform mit einem Teleskoparm zum Einschwenken einer Führungsvorrichtung,
Figur 24 eine der Figur 23 entsprechende Ansicht nach dem Einschwenken der Führungsvorrichtung,
Figur 25 die Vorderansicht der Figur 24,
Figur 26 die Seitenansicht der Figur 24,
Figur 27 die der Figur 26 entsprechende Seitenansicht mit angehobener und ausgeschwenkter Führungsvorrichtung,
Figur 28 die Draufsicht der Figur 24 und
Figur 29 die Draufsicht der Figur 23.

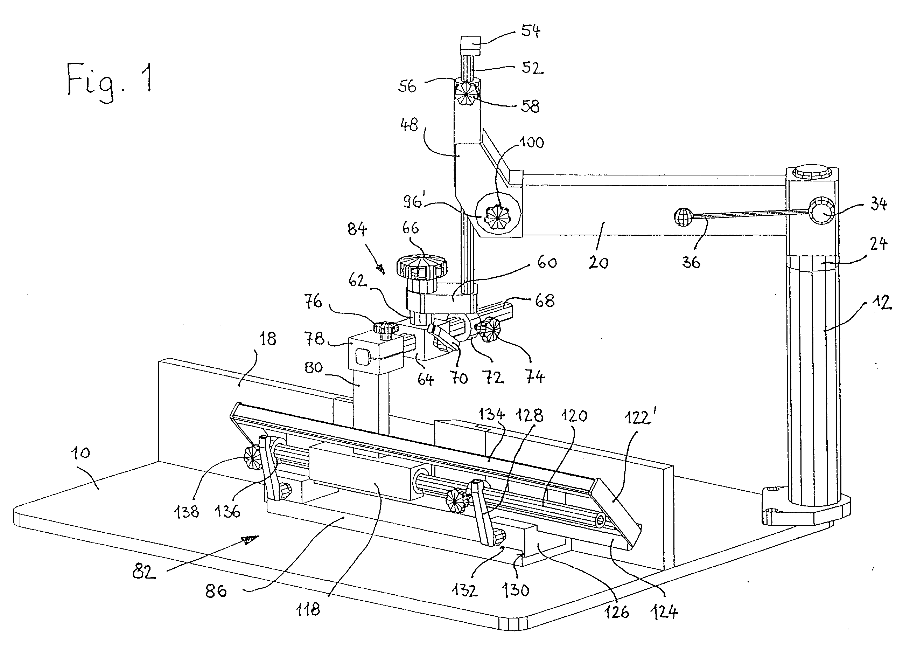

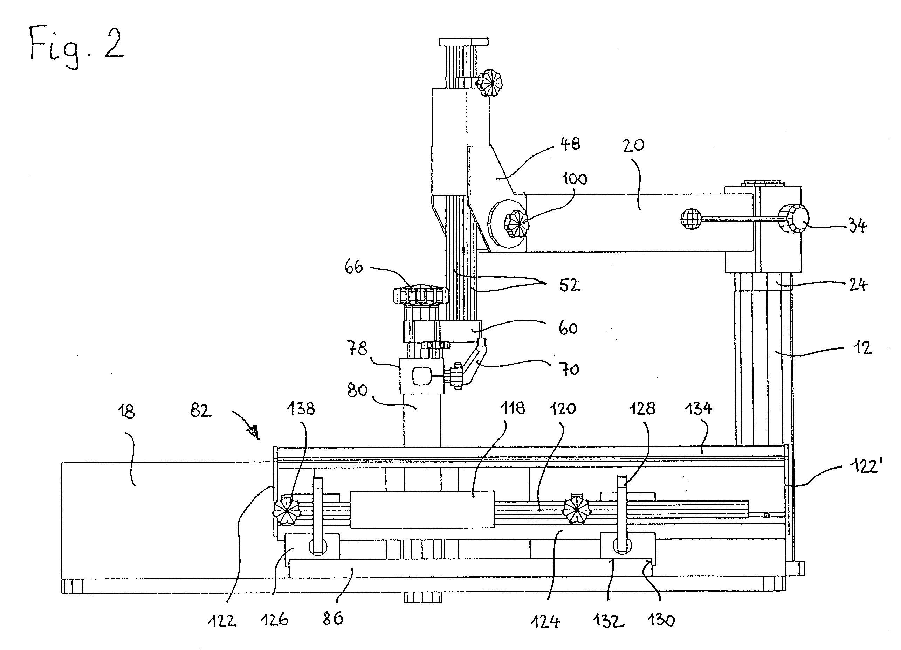

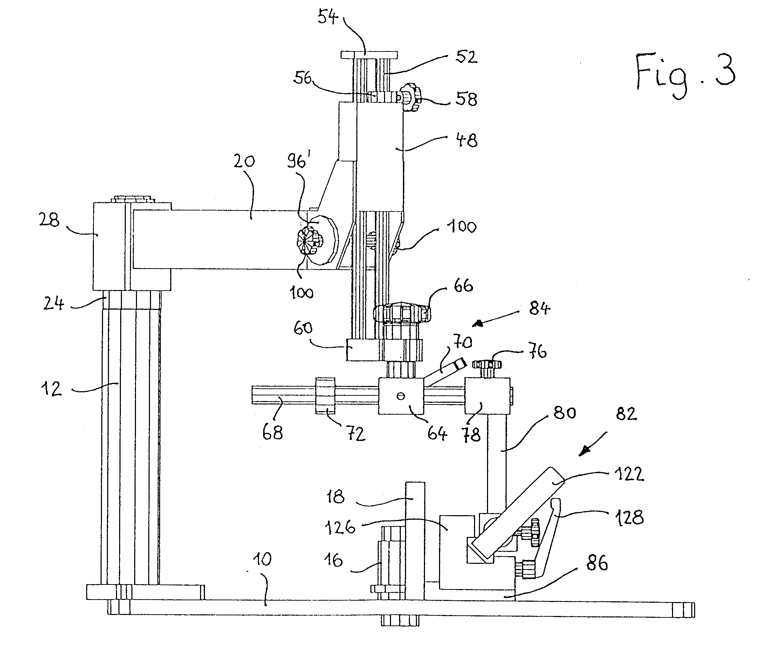

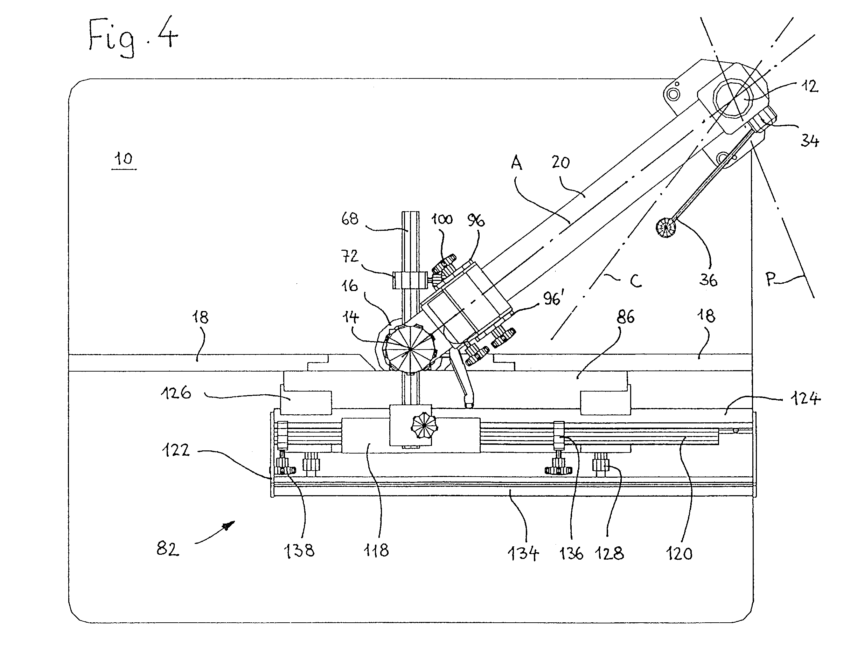

Im Ausführungsbeispiel der Figuren 1 bis 4 ist auf einem Maschinentisch 10 einer Tischfräsmaschine eine vertikale Tragsäule 12 befestigt, deren Position (Abstand und Winkelstellung) zur Drehachse 14 des Fräsers 16 (vgl. Figuren 3 und 4) definiert ist. Der Fräsbereich ist in bekannter Weise durch zwei vertikale Anschlagplatten 18 für das Werkstück 86 begrenzt.

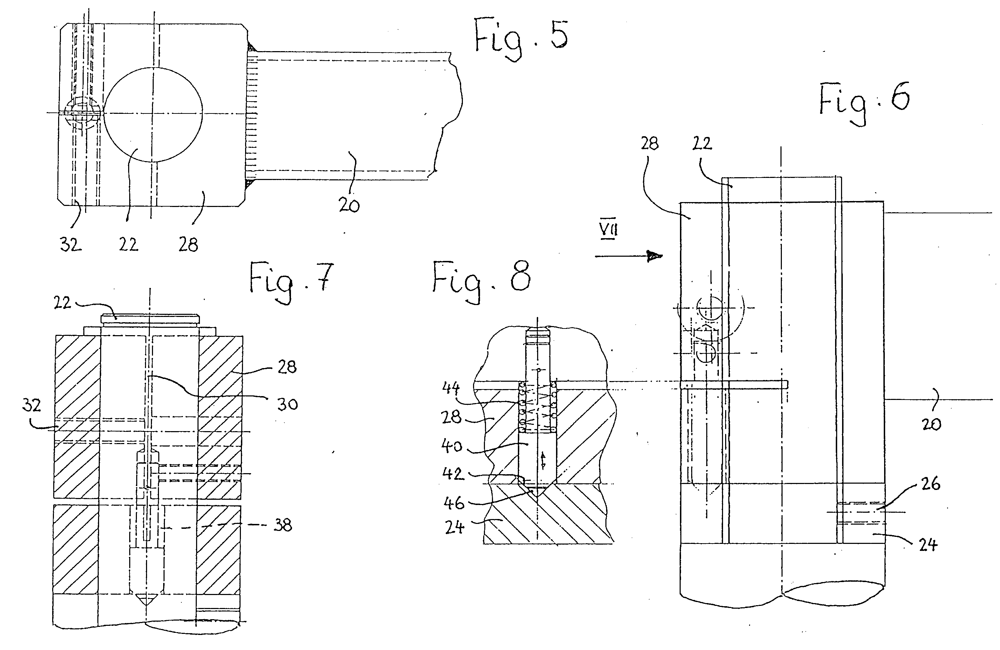

Am oberen Ende der Tragsäule 12 ist ein horizontaler Schwenkarm 20 gelagert, der in einer waagrechten Ebene über dem Maschinentisch 10 gedreht werden kann. Wie die Figuren 5 bis 8 zeigen, ist zu diesem Zweck das obere Ende der Tragsäule 12 als zylindrischer Lagerzapfen 22 ausgebildet, auf dem ein Stellring 24 befestigt ist, dessen Winkelstellung mit Hilfe einer radialen Feststellschraube 26 auf dem Lagerzapfen 22 fixiert werden kann. Auf der Oberseite des Stellringes 24 stützt sich eine um den Lagerzapfen 22 verdrehbare Lagerbuchse 28 ab, die mit dem freien Ende des Schwenkarms 20 fest verbunden ist, beispielsweise durch Schweißen. Figur 7 zeigt, daß in den oberen Bereich der Lagerbuchse 28 ein Vertikalschlitz 30 eingearbeitet ist; in diesen Bereich ist eine Gewindebohrung 32 eingearbeitet, die für die Aufnahme eines nicht dargestellten Gewindezapfens einer Feststellschraube 34 dient, die mit Hilfe eines Handhebels 36 festgezogen werden kann, um die Lagerbuchse 28 auf dem Lagerzapfen 22 festzuklemmen.

In den unteren Bereich der Lagerbuchse 28 ist eine Axialbohrung 38 eingearbeitet, in welche ein Raststift 40 eingesetzt ist. Die Spitze 42 des Raststiftes 40 wird durch eine Druckfeder 44 in einen Rastsitz 46 gedrückt. Auf diese Weise kann der Schwenkarm 20 in einer definierten Winkelposition festgeklemmt werden.

Figur 4 zeigt, daß insbesondere bei dem dort gezeigten Anwendungsfall für das Einsetzfräsen eine Arretierung des Schwenkarms 20 in drei Winkelpositionen günstig ist, welche durch die entsprechende Anordnung von drei Rastsitzen 46 im Stellring 24 definiert sind. Dabei handelt es sich um eine Arbeitsstellung A, eine Einricht- oder Werkstückwechselstellung C und eine Parkstellung P, in der der Schwenkarm 20 vollständig aus dem Arbeitsbereich der Fräsmaschine ausgeschwenkt ist. In der Stellung C kann das bearbeitete Werkstück 86 gefahrlos entnommen und ein neues für die Bearbeitung vorbereitet werden.

Am freien Ende des Schwenkarms 20 ist ein Gehäuse 48 angebracht, in welchem koaxial übereinander zwei Paare von Kugelbüchsen 50 angebracht sind, die für die frei verschiebbare Lagerung von zwei zueinander parallelen Führungsstangen 52 dienen. Die oberen Enden der beiden Führungsstangen 52 sind durch eine gemeinsame Endanschlagplatte 54 miteinander verbunden. Auf einer der beiden Führungsstangen 52 ist ein in axialer Richtung verstellbarer Anschlagring 56 angebracht, der auf der Führungsstange 52 durch eine Feststellschraube 58 festgeklemmt werden kann, um die Vertikalbewegung der beiden Führungsstangen 52 nach unten zu begrenzen. In der unteren Stellung liegt der Anschlagring 56 auf der Oberseite des Gehäuses 48 auf.

Vom unteren Ende der beiden Führungsstangen 52 steht radial eine Konsole 60 ab, an der über einen vertikal verlaufenden Zapfen 62 ein Querführungsblock 64 gelagert ist. Der Querführungsblock 64 kann über den Zapfen 62 verdreht werden; die eingestellte Winkelposition kann anschließend mit Hilfe einer Feststellschraube 66 fixiert werden, welche auf einen in der Konsole 60 untergebrachten Klemmkonus wirkt.

In eine waagrechte Bohrung des Querführungsblockes 64 ist eine Tragstange 68 horizontal frei verschiebbar eingesetzt. Die Tragstange 68 kann mit Hilfe eines Hebels 70 am Querführungsblock 64 fixiert werden. Auf das hintere Ende der Tragstange 68 ist ein Anschlagring 72 aufgesetzt, der durch eine Klemmschraube 74 fixiert werden kann, um auf diese Weise den Ausfahrweg der Tragstange 68 aus dem Querführungsblock 64 zu begrenzen.

Auf das vordere Ende der Tragstange 68 ist ein mit Hilfe einer Feststellschraube 76 fixierbarer Klemmblock 78 aufgesetzt, von dem eine vertikale Stange 80 nach unten absteht. Im Anwendungsfall der Figuren 1 bis 4 hängt an der Stange 80 eine Klemmeinrichtung 82 zum Einsetzfräsen eines Werkstückes 86. Die Klemmeinrichtung 82 hat ein am unteren Ende der Stange 80 befestigtes Gehäuse 118, in dem über Kugelbüchsen eine horizontale Achse 120 parallel zu den Anschlagplatten 18 und zum Maschinentisch 10 hin frei verschiebbar gelagert ist. An einem Ende ist die Achse 120 über ein radial abstehendes Verbindungselement 122 mit einer parallel zur Achse 120 verlaufenden Führungsschiene 124 fest verbunden, welche ein etwa dreieckiges Profil hat. Auf der Führungsschiene 124 sind zwei Spannbacken 126 verschiebbar gelagert, die über Klemmhebel 128 auf der Führungsschiene 124 fixiert werden können. Die beiden Spannbacken 126 haben jeweils eine vertikale Spannfläche 130 und eine horizontale Spannfläche 132, die zum Festklemmen des Werkstücks 86 dienen.

Von dem in Figur 1 rechten Ende der Führungsschiene 124 steht schräg nach oben eine Lasche 122' ab, die dieselbe Form wie das Verbindungelement 122 am linken Ende der Führungsschiene 124 hat. Zwischen beiden ist ein länglicher Handgriff 134 befestigt, der parallel zu der Achse 120 verläuft. Mit Hilfe des Handgriffes 134 kann die Klemmeinrichtung 82 bewegt werden, und zwar in x-Richtung in der Längsführung, wobei die Achse 120 in ihrer Längsrichtung verschoben wird, in y-Richtung, bei der die Tragstange 68 im Querführungsblock 64 verschoben wird, und in z-Richtung über die Vertikalführung, die durch die beiden Führungsstangen 52 und die Kugelbüchsen 50 gebildet wird.

Für eine Begrenzung der Einsetzlänge in x-Richtung ist zu beiden Seiten des Gehäuses 118 auf der Achse 120 je ein Anschlagring 136 verstellbar angebracht, der durch eine Klemmschraube 138 auf der Achse 120 fixiert werden kann.

Nachdem in der Werkstückwechselstellung C (vgl. Figur 4) das zu bearbeitende Werkstück 86 zwischen den beiden Spannbacken 126 eingespannt und die zu fräsende Einsetzlänge über die Anschlagringe 136 eingestellt worden ist, wird die Klemmeinrichtung 82 mit Hilfe des Handgriffes 134 in die Arbeitsstellung A geschwenkt. Die Rückführungsmittel im Bereich der Querführung, z. B. eine Schraubendruckfeder zwischen dem Querführungsblock 64 und dem Klemmblock 78, sorgen dafür, daß nach dem Einschwenken in die Arbeitsstellung A die Klemmeinrichtung 82 noch einen Abstand zu den Anschlagplatten 18 hat, so daß das Werkstück 86 nicht sofort in den Bereich des Fräsers 16 kommt. Erst nachdem in x-Richtung die Ausgangsstellung durch Anschlag an einem der beiden Anschlagringe 136 eingenommen ist, wird die Klemmeinrichtung 82 über den Handgriff 120 in y-Richtung gegen die Anschlagplatten 18 bewegt, so daß der Fräser 16 mit dem Werkstück 86 in Eingriff kommt. Durch Längsverschieben in x-Richtung wird dann die gewünschte Nut eingefräst, so daß nach dem Durchlauf der Einsetzlänge, die durch den zweiten Anschlagring 136 begrenzt ist, die Klemmeinrichtung 82 durch die Rückführungsmittel wieder aus dem Fräsbereich herausgeschoben wird. Sodann kann in der Werkstückwechselstellung C das fertig bearbeitete Werkstück 86 gegen ein neues Werkstück ausgetauscht werden.

Die Zustellbewegung in y-Richtung und die Vorschubbewegung in x-Richtung können auch automatisiert werden, beispielsweise durch Einbau von Schrittmotoren in der Längsführung und in der Querführung. Im Ausführungsbeispiel ist die Querführung winkeleinstellbar an der Konsole 60 befestigt. Statt dessen ist es auch möglich, die Klemmeinrichtung 82 winkelverstellbar an der Stange 80 aufzuhängen, beispielsweise über ein Scharnier.

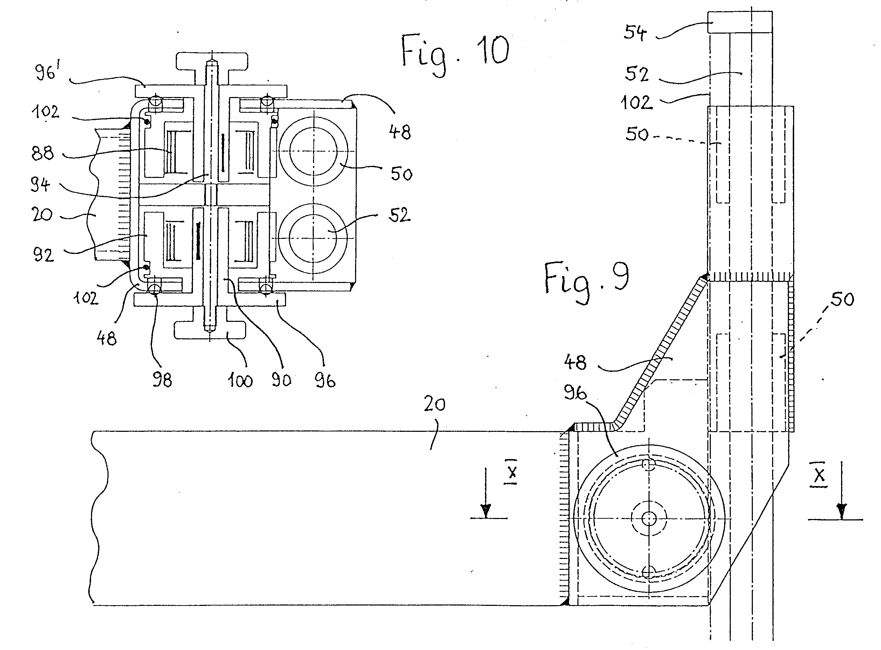

Die aus den beiden Führungsstangen 52 bestehende Vertikalführung, an der gemäß der Erfindung die Adaptereinrichtung 84 mit dem Querführungsblock 64 angebracht ist, hat sowohl Mittel zur Erzeugung einer vertikalen Andruckkraft auf das zu bearbeitende Werkstück 86 als auch Mittel zur Gewichtsentlastung der angebauten Organe, beispielsweise der Klemmeinrichtung 82. Beide Mittel sind in dem Gehäuse 48 untergebracht, das am freien Ende des Schwenkarms 20 befestigt ist. Sowohl die Mittel zur Druckerzeugung als auch zur Gewichtsentlastung bestehen im Ausführungsbeispiel der Figuren 9 und 10 aus jeweils einer Triebfeder 88 in Form einer Spiralfeder, die mit einem Ende an einer verdrehbaren Stellbuchse 90 und mit dem anderen Ende an der Innenseite einer drehbaren Trommel 92 befestigt ist. Die beiden Stellbuchsen 90 sind zueinander koaxial auf einer Achse 94 gelagert und können zur Einstellung der Vorspannung der jeweiligen Triebfeder 88 mit Hilfe eines Handrades 96 verdreht werden, das an der Stellbuchse 90 befestigt und an der Außenseite des Gehäuses 48 zugänglich ist. Gegen die Innenseite des Handrades 96 wirken federnd belastete Druckkugeln 98, die in Rastsitze an der Innenseite des Handrades 96 eingreifen. In der gewählten Vorspannungsstellung kann das Handrad 96 und mit diesem die Stellbuchse 90 durch eine Klemmschraube 100 festgeklemmt werden, die auf das Gewindeende der Achse 94 aufgeschraubt ist.

Auf jede Trommel 92 ist ein Zugseil 102 gewickelt, dessen Ende an der Vertikalführung angreift. Im Falle des Handrades 96 für die Einstellung der Gewichtsentlastung ist das Ende des Zugseils 102 an der Konsole 60 am unteren Ende der beiden Führungsstangen 52 befestigt, während das Zugseil 102, das auf die gegenüberliegende Trommel 92 aufgewickelt ist, deren Vorspannungsstellung durch das Handrad 96' für die Einstellung der Andruckkraft eingestellt wird, an der Endanschlagplatte 54 angreift.

Neben den beschriebenen und dargestellten Mitteln zur Gewichtsentlastung und zur Druckerzeugung können selbstverständlich andere Systeme verwendet werden, beispielsweise Gasfedern. Es besteht auch die Möglichkeit, die Vertikalführung mit einer motorischen Hubeinrichtung zu verbinden, beispielsweise einem elektronisch gesteuerten Motor, der dann gleichzeitig die Aufgabe übernimmt, einen bestimmten Andruck auf das zu bearbeitende Werkstück 86 auszuüben.

Wie bereits erwähnt, ist es insbesondere beim Ausführungsbeispiel der Figuren 1 bis 4, bei dem an die Adaptereinrichtung 84 die Klemmeinrichtung 82 für das Einsetzfräsen angebaut ist, sinnvoll, wenn am Querführungsblock 64 Rückführungsmittel angebracht sind, beispielsweise eine nicht weiter dargestellte Druckfeder, die nach dem Ende des Fräsvorganges die Tragstange 68 und mit dieser die angebaute Klemmeinrichtung 82 aus der Frässtellung automatisch herausschiebt.

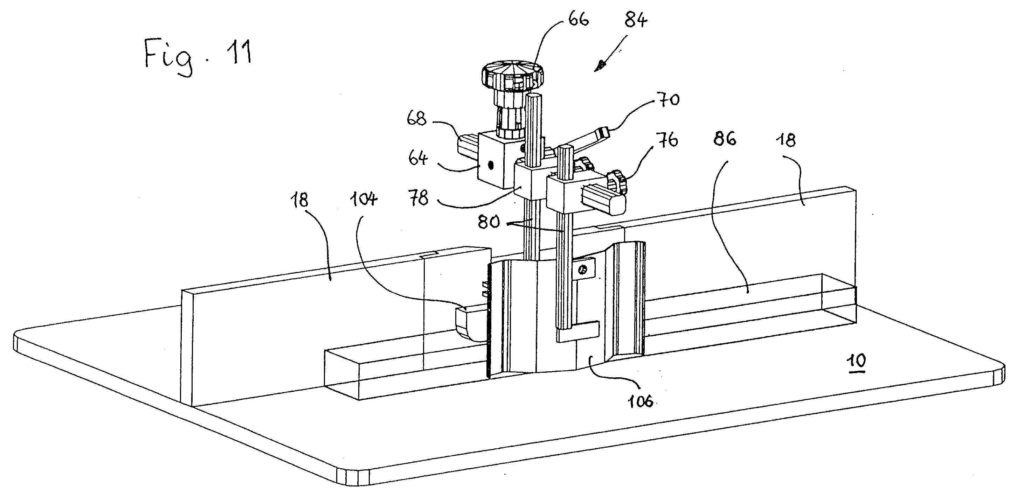

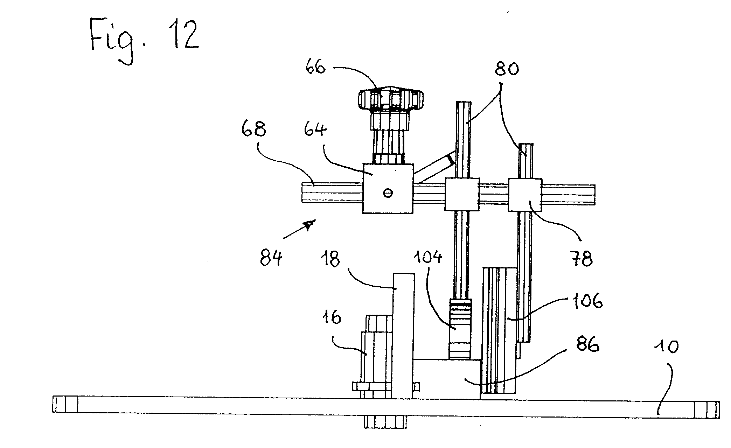

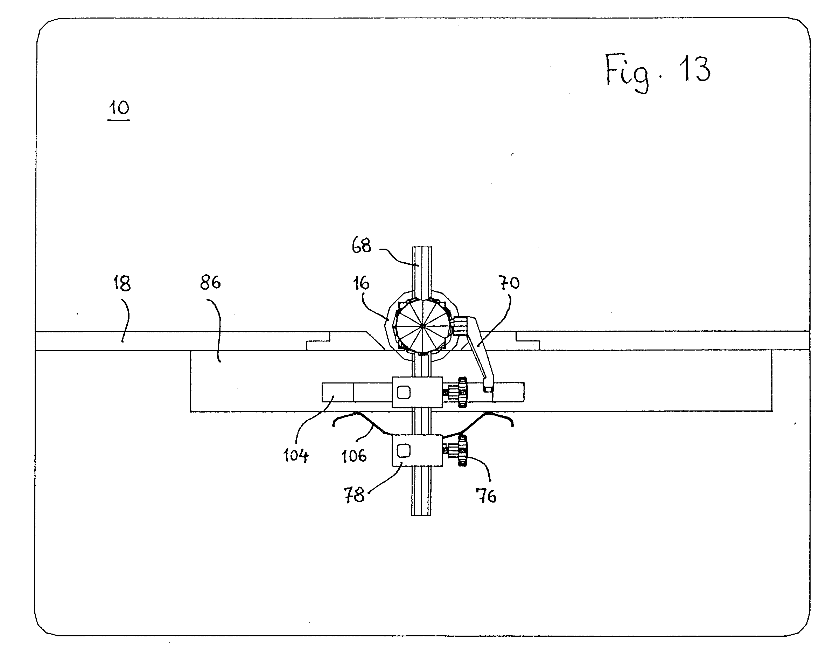

Die Figuren 11 bis 13 zeigen einen Anwendungsfall, bei dem an die Adaptereinrichtung 84 anstelle der Klemmeinrichtung 82 andere Organe angebaut sind, nämlich ein Druckschuh 104 und ein das Werkstück 86 abdeckendes Führungsorgan 106. Sowohl der Druckschuh 104 als auch das Führungsorgan 106 sind an je einer vertikalen Stange 80 befestigt, die über jeweils einen Klemmblock 78 mit Feststellschraube 76 auf der Tragstange 68 fixiert werden kann, welche von dem Querführungsblock 64 aufgenommen wird. Dieser Anwendungsfall eignet sich vor allem zum Fräsen leistenförmiger Werkstücke 86 an den beiden Anschlagplatten 18.

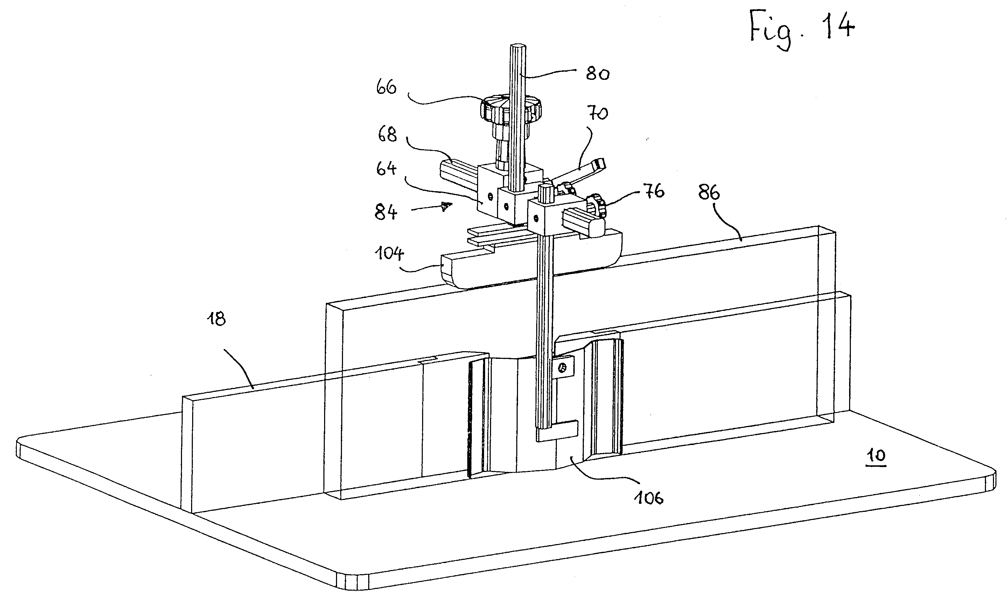

Figur 14 zeigt einen Anwendungsfall, bei dem das zu bearbeitende Werkstück 86 aus einer stehenden Platte besteht, die höher als die beiden Anschlagplatten 18 sind. Auch hier sind auf die Tragstange 68 der Adaptereinrichtung 84 ein Druckschuh 104 und ein Führungsorgan 106 angebaut, wobei der Druckschuh 104 auf die schmale Oberkante des plattenförmigen Werkstückes 86 wirkt.

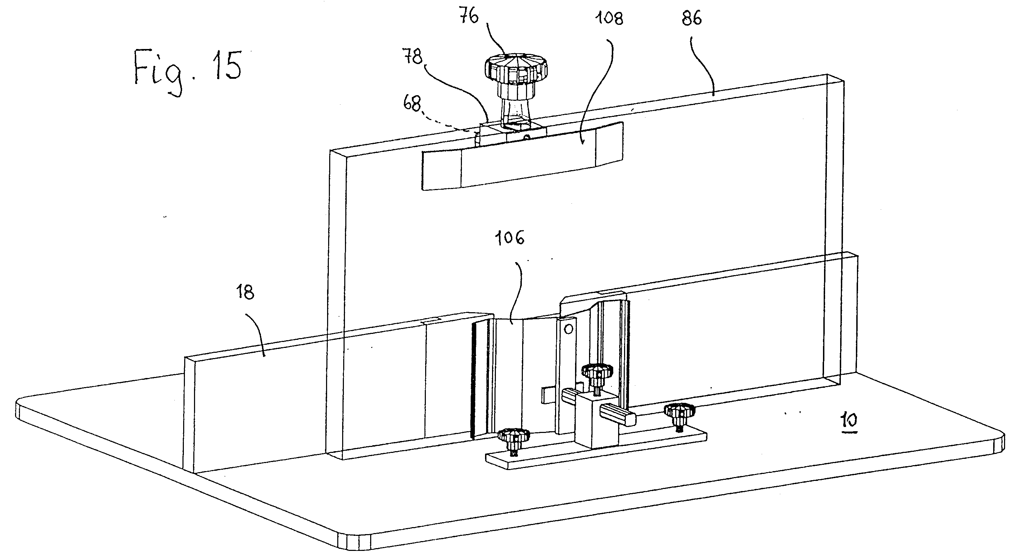

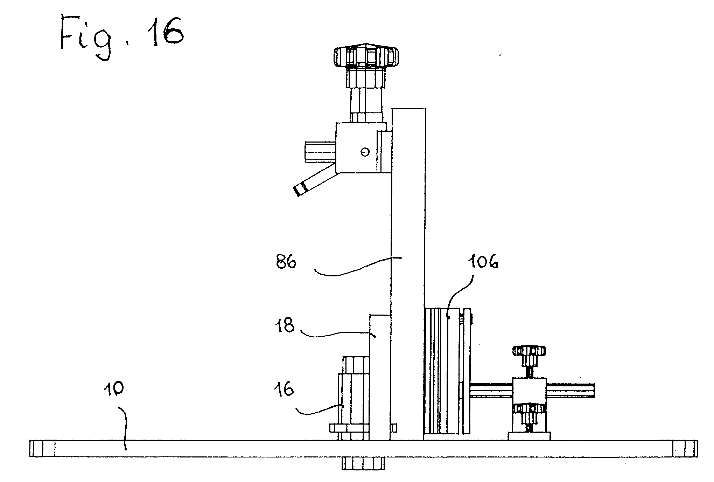

Die Figuren 15 und 16 zeigen einen Einsatzfall, bei dem ein plattenförmiges Werkstück 86 auf der zu fräsenden Seite von einem Führungsschuh 108 abgestützt wird, der mit Hilfe seines Klemmblocks 78 auf die Tragstange 68 der Adaptereinrichtung aufgesetzt ist. Die horizontale Andruckkraft gegen den Fräser wird durch ein Führungsorgan 106 ausgeübt, das dem Führungsorgan 106 der Figur 11 entspricht, jedoch auf dem Maschinentisch 10 befestigt ist.

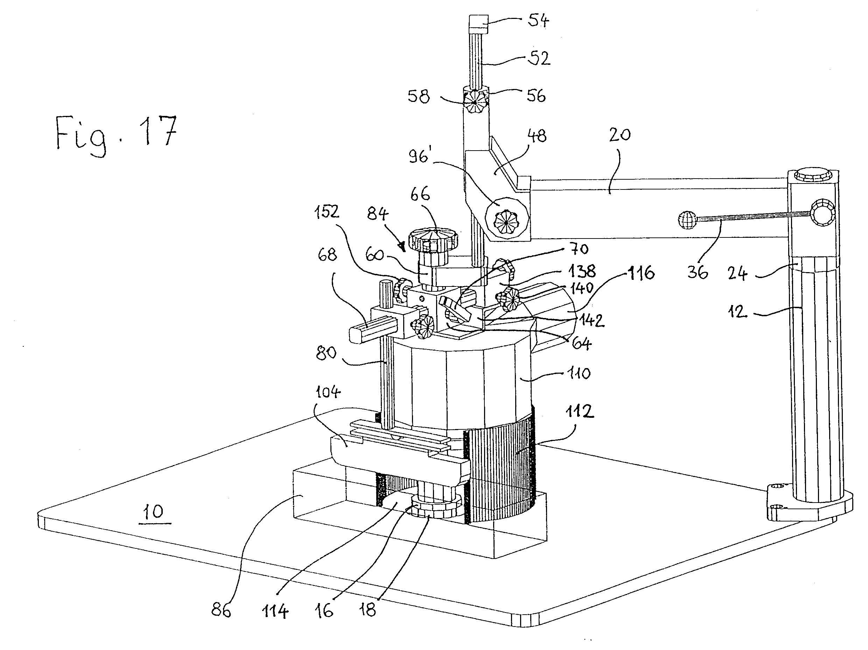

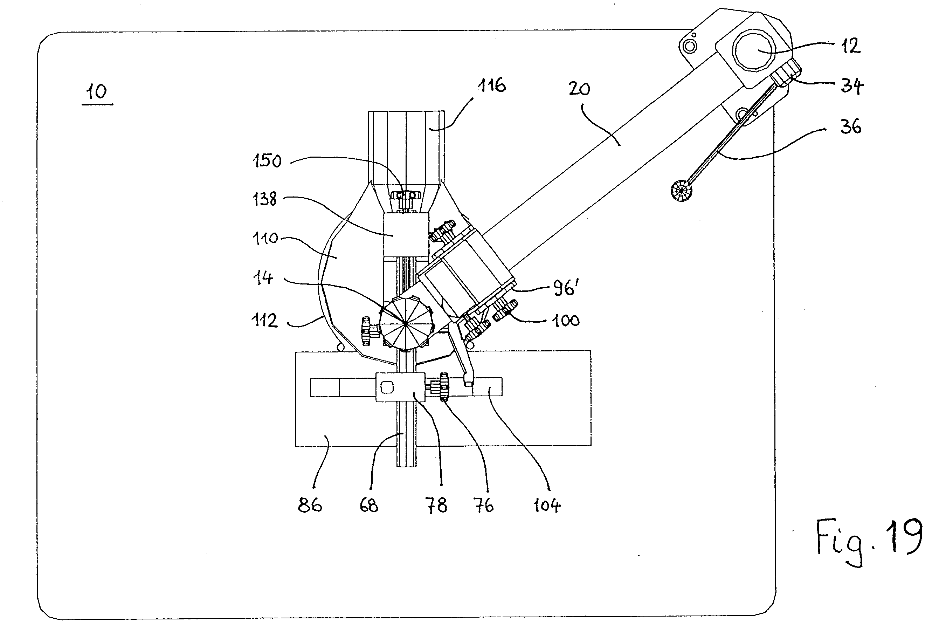

Im Anwendungsfall der Figuren 17 bis 19 sind auf die Tragstange 68 der Adaptereinrichtung 84 ein Druckschuh 104 und eine Schutzhaube 110 zum Bogenfräsen aufgesetzt. Zu diesem Zweck ist auf das hintere Ende der Tragstange 68 ein Klemmblock 138 aufgesetzt, der durch eine Klemmschraube 140 fixiert werden kann. An dem Klemmblock 138 hängt ein Winkelträger 142, an dem die zylindrische Schutzhaube 110 mit ihrer Oberseite befestigt ist. Von dem vorderen Klemmblock 78 steht nach unten die vertikale Stange 80 ab, an deren unterem Ende der Druckschuh 104 befestigt ist.

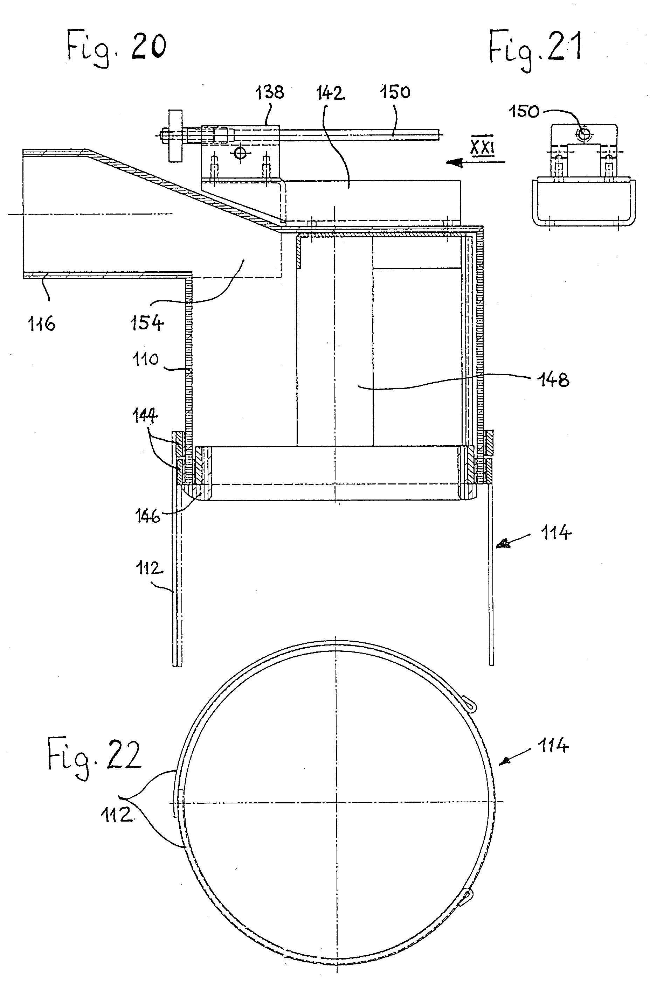

Die Schutzhaube 110 besteht aus einem Zylinder, auf dessen Außenwand zwei teilzylindrische Schutzschalen 112 aufgesetzt sind, die sich im der Fräsöffnung 114 gegenüberliegenden Bereich überlappen (vgl. insbesondere Figur 22). Das obere Ende jeder beispielsweise aus Aluminiumblech hergestellten Schutzschale 112 ist an einem Ring 144 befestigt. Figur 20 zeigt, daß die beiden Ringe 144 übereinander angeordnet sind. Sie sind so auf der Außenwand der zylindrischen Schutzhaube 110 gelagert, daß sie sich leicht gegeneinander verdrehen lassen und vertikal verschoben werden können. Hierzu kann die Innenfläche der Ringe 144 mit einem Reibbelag versehen sein oder ein Wellenprofil aufweisen, das mit einem entsprechenden Profil an der Außenwand der zylindrischen Schutzhaube 110 in Reibberührung ist.

Figur 20 zeigt weiter, daß am unteren Rand der zylindrischen Schutzhaube 110 ein Druckring 146 aus Holz abgestützt ist, der auf das zu bearbeitende Werkstück 86 einen Andruck ausübt. Der Druckring 146 ist mit Hilfe eines Bügels 148 an der Oberseite der Schutzhaube 110 befestigt.

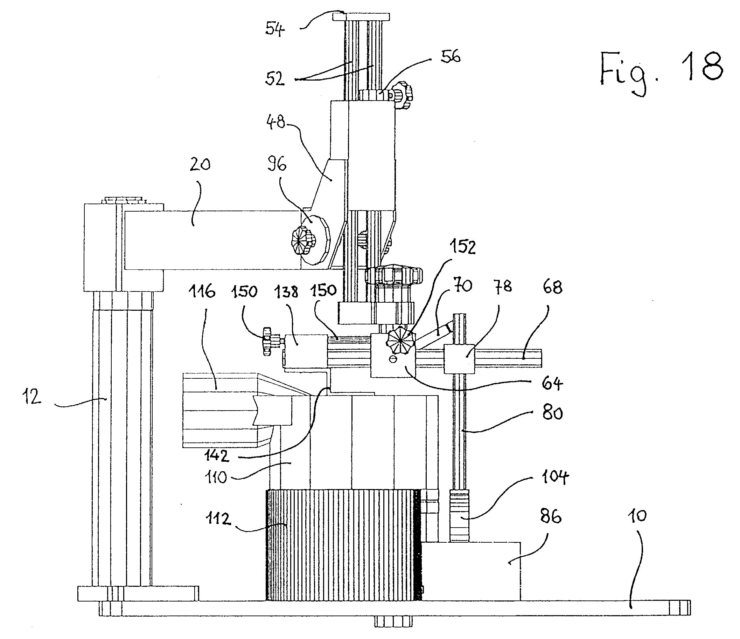

Insbesondere die Figuren 18 und 20 zeigen, daß in den Klemmblock 138 eine Einstellschraube 150 eingeschraubt ist, die parallel zu der Tragstange 68 verläuft. Das freie Ende der Einstellschraube 150 greift in eine Durchgangsbohrung des Querführungsblockes 64 ein, wo es mit Hilfe einer Klemmschraube 152 festgeklemmt werden kann. Die horizontale Position der Schutzhaube 110 wird zunächst durch Verschieben der Tragstange 68 im Querführungsblock 64 herbeigeführt. Danach kann durch die Einstellschraube 150 die Feineinstellung vorgenommen werden. Sodann wird die endgültige Stellung durch die Klemmschrauben 74 und 152 sowie den Klemmhebel 70 fixiert, wodurch die gesamte Aufhängung der Schutzhaube 110 stabilisiert ist.

Im oberen Bereich der Schutzhaube 110 ist eine Absaugöffnung 154 mit einem Stutzen 116 vorgesehen, so daß die Schutzhaube 110 an eine Späneabsaugvorrichtung angeschlossen werden kann.

Die vorstehende Beschreibung der Erfindung zeigt die universelle Einsatzmöglichkeit der Vorrichtung. Je nach den vorhandenen Platzverhältnissen und Einbaufällen kann die Tragsäule 12 auf dem Maschinentisch 10, am Boden, an einer Wand oder an der Decke angebracht werden. Darüber hinaus ist es selbstverständlich möglich, die Tragsäule 12 an vorhandenen Gehäusen anzubringen, die den Fräser abdecken und an eine Absaugeinrichtung angeschlossen sind.

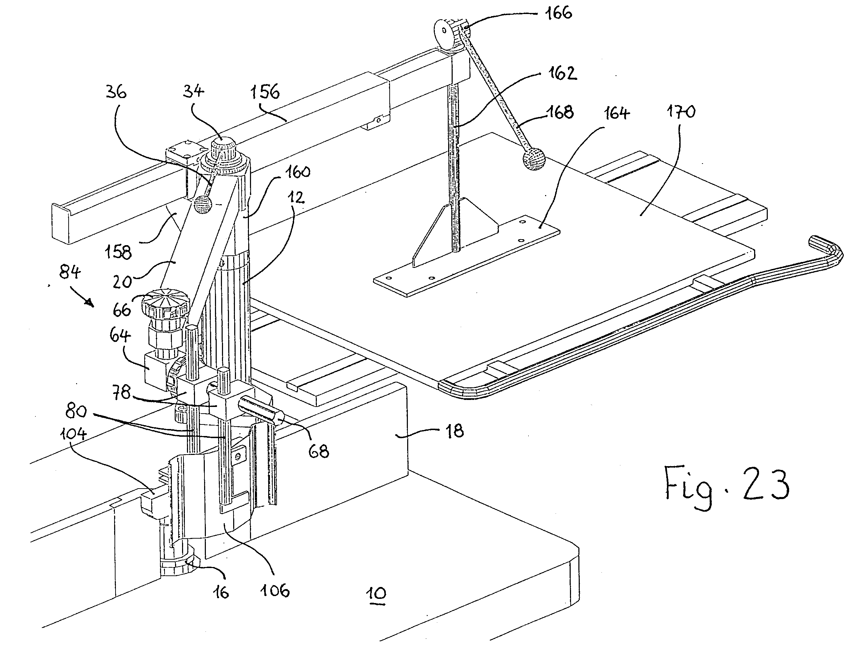

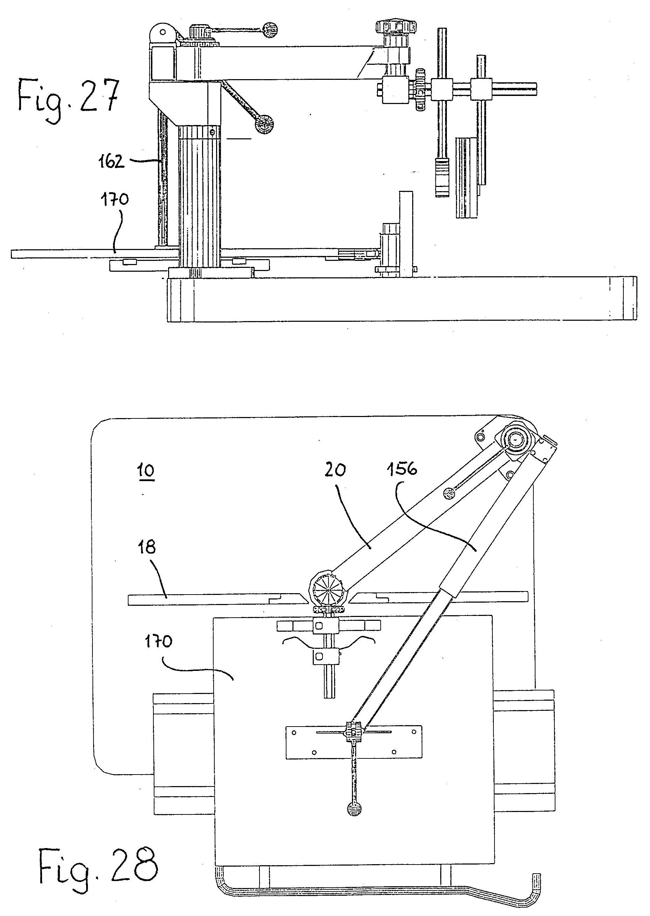

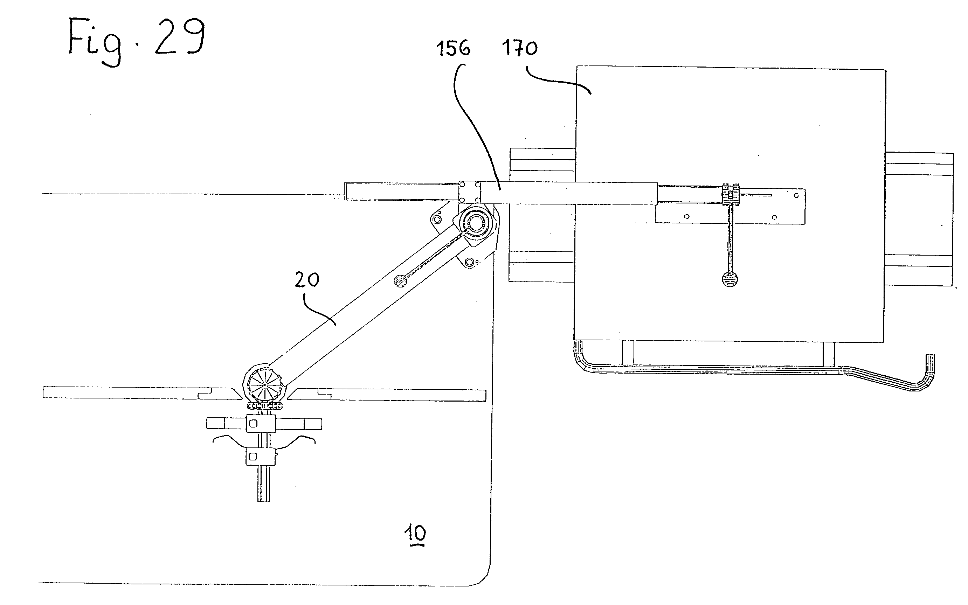

In den Figuren 23 bis 29 ist eine weitere Ausgestaltung der Erfindung dargestellt. Ähnlich wie beim Ausführungsbeispiel der Figuren 11 bis 13 ist am freien Ende des Schwenkarms 20 - hier ohne Zwischenschaltung einer Vertikalführung - der Querführungsblock 64 der Adaptereinrichtung 84 angebaut. Auf die horizontale Tragstange 68 sind die beiden Klemmblöcke 78 aufgesetzt, deren vertikale Stangen 80 den Druckschuh 104 bzw. das Führungsorgan 106 tragen.

Unabhängig von dem Schwenkarm 20 ist an der Tragsäule 12 ein horizontal abstehender Teleskoparm 156 schwenkbar gelagert, und zwar über einen Kragarm 158, der mit einem Ring 160 verbunden ist, welcher auf der Tragsäule 12 unter dem Schwenkarm 20 drehbar gelagert ist. Am freien Ende des Teleskoparms 156 ist eine vertikal verstellbare Haltestange 162 angebracht, die an ihrem unteren Ende eine horizontale Befestigungsplatte 164 trägt. Die Haltestange 162 kann über einen Exzenter 166 mit Hilfe eines Hebels 168 zwischen einer oberen und einer unteren Position verstellt werden, um eine an der Befestigungsplatte 164 angebrachte Führungsvorrichtung 170 anzuheben bzw. abzusenken. Bei der Führungsvorrichtung 170 kann es sich beispielsweise um ein Kreuztischsystem handeln, das Gegenstand der EP 95 10 2182.3 ist.

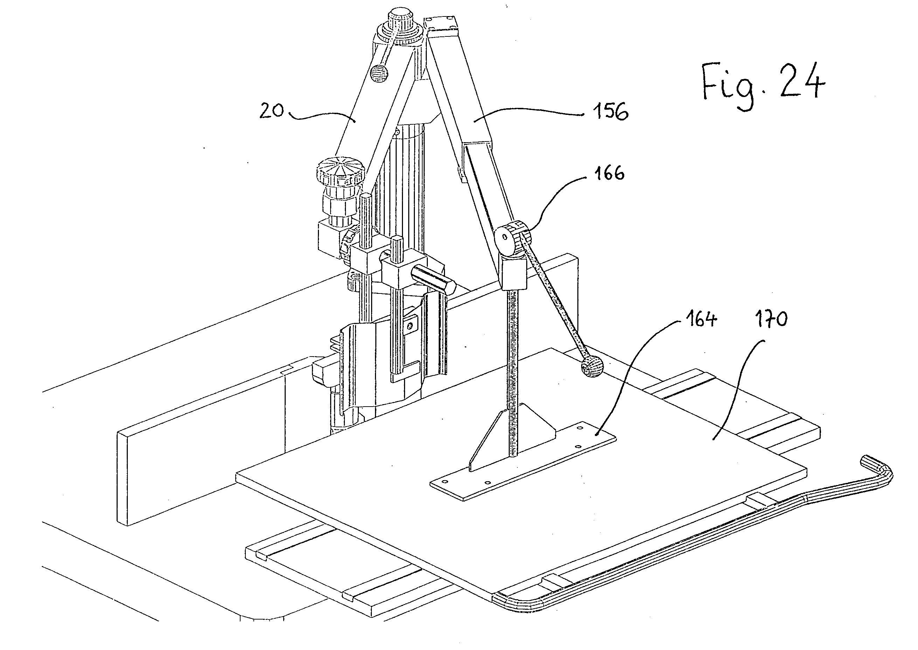

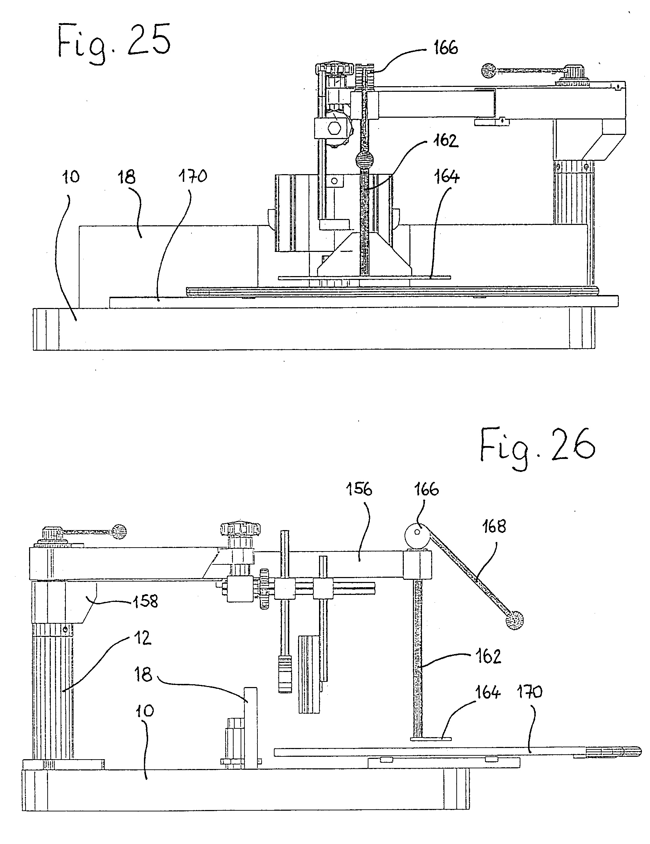

Figur 23 zeigt den Teleskoparm 156 in der ausgeschwenkten Bereitstellungsposition, während Figur 24 die Stellung zeigt, in der die Führungsvorrichtung 170 in ihrer Einsatzstellung gegen die Anschlagplatten 18 geschwenkt ist. Um die Führungsvorrichtung 170 auf dem Maschinentisch 10 zu befestigen, wird sie Hilfe des Hebels 168 abgesenkt, so daß sie am Maschinentisch 10 verschraubt werden kann. Nachdem sie dann von der Befestigungsplatte 164 gelöst worden ist, wird über das Exzenterorgan 166 die Haltestange 162 angehoben (Figuren 25 und 26), so daß danach der Teleskoparm 156 in seine Wartestellung ausgeschwenkt werden kann.

## Patentansprüche

1. Arbeitsvorrichtung für Fräsmaschinen zum Bearbeiten von Werkstücken aus Holz mit einem von einer festen, vertikalen Tragsäule (12) horizontal abstehenden Schwenkarm (20) für die Befestigung von Druckorganen, der in einer horizontalen Ebene verstellbar ist und an seinem freien Ende eine Vertikalführung für das Druckorgan trägt, die mit Mitteln zur Erzeugung einer vertikalen Andruckkraft ausgerüstet ist, **dadurch gekennzeichnet**, daß die Vertikalführung nach oben und unten frei verschiebbar gelagert ist, Mittel zur Gewichtsentlastung der angebauten Organe aufweist und an ihrem unteren Ende eine Adaptereinrichtung (84) zum auswechselbaren Anbau von Führungsorganen, Schutzorganen und Druckorganen trägt, die einen Querführungsblock (64) aufweist, in dem eine horizontal frei verschiebbare Tragstange (68) für die anzubauenden Organe gelagert ist.

2. Arbeitsvorrichtung nach Anspruch 1, **dadurch gekennzeichnet**, daß an der Tragsäule (12) zusätzlich ein horizontal abstehender Teleskoparm (156) unabhängig von dem Schwenkarm (20) schwenkbar gelagert ist, der an seinem freien Ende eine vertikal verstellbare Haltestange (162) für die Aufnahme einer auf dem Maschinentisch (10) fixierbaren Führungsvorrichtung (170) aufweist.

3. Arbeitsvorrichtung nach Anspruch 2, **dadurch gekennzeichnet**, daß die Haltestange (162) am freien Ende des Teleskoparmes (156) über ein durch einen Hebel (168) betätigbares Exzenterorgan (166) vertikal verstellbar gelagert ist.

4. Arbeitsvorrichtung nach Anspruch 2 oder 3, **dadurch gekennzeichnet**, daß der Teleskoparm (156) an einem von der Tragsäule (12) abstehenden Kragarm (158) befestigt ist, der mit einem Ring (160) verbunden ist, welcher auf der Tragsäule (12) drehbar gelagert ist.

5. Arbeitsvorrichtung nach einem der Ansprüche 1 bis 4, **dadurch gekennzeichnet**, daß der Schwenkarm (20) in einer Arbeitsstellung (A), einer Werkstückwechselstellung (C) und einer Parkstellung (P) an der Tragsäule (12) arretierbar ist.

6. Arbeitsvorrichtung nach einem der vorhergehenden Ansprüche, **dadurch gekennzeichnet**, daß die Mittel zur Druckerzeugung und/oder zur Gewichtsentlastung eine Triebfeder (88) mit einstellbarer Vorspannung aufweisen.

7. Arbeitsvorrichtung nach Anspruch 6, **dadurch gekennzeichnet**, daß die beiden Triebfedern (88) zueinander koaxial in einem Gehäuse (48) am freien Ende des Schwenkarms (20) angebracht und mit je einer drehbaren Trommel (92) verbunden sind, über die ein Zugseil (102) gewickelt ist, dessen freies Ende an der Vertikalführung angreift.

8. Arbeitsvorrichtung nach einem der Ansprüche 1 bis 7, **dadurch gekennzeichnet**, daß die Vertikalführung aus zwei parallelen Führungsstangen (52) besteht, die in Kugelbüchsen (50) am freien Ende des Schwenkarmes (20) vertikal frei verschiebbar gelagert sind.

9. Arbeitsvorrichtung nach Anspruch 8, **dadurch gekennzeichnet**, daß die oberen Enden der beiden Führungsstangen (52) durch eine Endanschlagplatte (54) miteinander verbunden sind.

10. Arbeitssvorrichtung nach Anspruch 8 oder 9, **dadurch gekennzeichnet**, daß auf einer Führungsstange (52) ein verstellbarer Anschlagring (56) angebracht ist.

11. Arbeitsvorrichtung nach einem der Ansprüche 1 bis 10, **dadurch gekennzeichnet**, daß der Querführungsblock (64) winkeleinstellbar an einer Konsole (60) befestigt ist, die vom unteren Ende der Verikalführung radial absteht.

12. Arbeitsvorrichtung nach Anspruch 11, **dadurch gekennzeichnet**, daß die Tragstange (68) am Querführungsblock (64) verriegelbar ist.

13. Arbeitsvorrichtung nach Anspruch 11 oder 12, **dadurch gekennzeichnet**, daß der Querführungsblock (64) Rückführungsmittel zum automatischen Ausschieben der Tragstange (68) und der angebauten Organe aus der Frässtellung aufweist.

14. Arbeitsvorrichtung nach einem der Ansprüche 11 bis 13, **dadurch gekennzeichnet**, daß auf der Tragstange (68) ein verstellbarer Anschlagring (72) angebracht ist.

15. Arbeitsvorrichtung nach einem Ansprüche 1 bis 14, **dadurch gekennzeichnet**, daß auf die Tragstange (68) mittels Klemmelementen (76, 78) ein Druckschuh (104) und/oder ein das Werkstück (86) abdeckendes Führungsorgan (106) aufsetzbar ist.

16. Arbeitsvorrichtung nach einem der Ansprüche 1 bis 14, **dadurch gekennzeichnet**, daß auf die Tragstange (68) mittels Klemmelementen (76, 78) eine das Werkstück kraftschlüssig aufnehmende Klemmeinrichtung (82) zum Einsetzfräsen aufsetzbar ist.

17. Arbeitsvorrichtung nach Anspruch 16, **dadurch gekennzeichnet**, daß die Klemmeinrichtung (82) an einer horizontalen Achse (120) hängt, die in einer Längsführung (118) verschiebbar gelagert ist, welche mit der horizontalen Tragstange (68) verbunden ist, die in Richtung auf den Anschlag (18) in der Querführung (64) verschiebbar ist.

18. Arbeitsvorrichtung nach Anspruch 17, **dadurch gekennzeichnet**, daß die Längsführung (118) der Klemmeinrichtung (82) winkelverstellbar mit der Tragstange (68) verbunden ist.

19. Arbeitsvorrichtung nach Anspruch 17 oder 18, **dadurch gekennzeichnet**, daß die Längsführung in einem Gehäuse (118) untergebracht ist, das Kugelbüchsen für die freie Verschiebbarkeit der horizontalen Achse (120) trägt.

20. Arbeitsvorrichtung nach einem der Ansprüche 17 bis 19, **dadurch gekennzeichnet**, daß zu beiden Seiten der Längsführung (118) auf der horizontalen Achse (120) verstellbare Anschlagringe (136) für die Begrenzung der zu fräsenden Einsetzlänge angebracht sind.

21. Arbeitsvorrichtung nach einem der Ansprüche 17 bis 20, **dadurch gekennzeichnet**, daß die horizontale Achse (120) über radial abstehende Verbindungselemente (122, 122') mit einer Führungsschiene (124) für zwei das Werkstück (86) klemmende Spannbacken (126) verbunden ist.

22. Arbeitsvorrichtung nach Anspruch 21, **dadurch gekennzeichnet**, daß die Spannbacken (126) jeweils eine vertikale Spannfläche (130) und eine horizontale Spannfläche (132) haben.

23. Arbeitsvorrichtung nach einem der Ansprüche 17 bis 22, **dadurch gekennzeichnet**, daß die horizontale Achse (120) mit einem Handgriff (134) verbunden ist.

24. Arbeitsvorrichtung nach einem der Ansprüche 1 bis 14, **dadurch gekennzeichnet**, daß auf die Tragstange (68) mittels Klemmelementen (76, 78) eine zylindrische Schutzhaube (110) zum Bogenfräsen aufsetzbar ist.

25. Arbeitsvorrichtung nach Anspruch 24, **dadurch gekennzeichnet**, daß die Schutzhaube (110) eine vordere Fräsöffnung (114) aufweist, welche durch zwei an der Schutzhaube (110) angebrachte und von dieser nach unten abstehende, relativ zueinander frei verdrehbare, teilzylindrische Schutzschalen (112) teilweise abdeckbar ist, die sich unter Freilassung der Fräsöffnung (114) über den ganzen Umfang der zylindrischen Schutzhaube (110) erstrecken, sich im der Fräsöffnung (114) gegenüberliegenden Bereich überlappen und mit ihren oberen Enden an je einem Ring (144) befestigt sind, der vertikal verschiebbar und verdrehbar auf der Außenwand der zylindrischen Schuthaube (110) gelagert ist.

26. Arbeitsvorrichtung nach Anspruch 25, **dadurch gekennzeichnet**, daß die Schutzschalen (112) im der Fräsöffnung (114) gegenüberliegenden Bereich Rückführmittel zum Einstellen einer minimalen Fräsöffnung (114) haben.

27. Arbeitsvorrichtung nach Anspruch 25 oder 26, **dadurch gekennzeichnet**, daß am unteren Rand der zylindrischen Schutzhaube (110) ein Druckring (146) vorgesehen ist.

28. Arbeitsvorrichtung nach Anspruch 27, **dadurch gekennzeichnet**, daß der Druckring (146) über einen Bügel (148) an der Oberseite der Schutzhaube (110) befestigt ist.

29. Arbeitsvorrichtung nach einem der Ansprüche 24 bis 28, **dadurch gekennzeichnet**, daß an der Oberseite der Schutzhaube (110) ein Klemmblock (138) befestigt ist, der auf der Tragstange (68) des Querführungsblocks (64) horizontal verstellbar gelagert ist.

30. Arbeitsvorrichtung nach Anspruch 29, **dadurch gekennzeichnet**, daß in den Klemmblock (138) eine Einstellschraube (150) eingeschraubt ist, deren freies Ende in einer Bohrung des Querführungsblocks (64) feststellbar ist.

31. Arbeitsvorrichtung nach einem der Ansprüche 24 bis 30, **dadurch gekennzeichnet**, daß die Schutzhaube (110) eine Absaugöffnung (154) für den Anschluß an eine Späneabsaugvorrichtung hat.

32. Arbeitsvorrichtung nach einem der vorhergehenden Ansprüche, **dadurch gekennzeichnet**, daß die Vertikalführung mit einer motorischen Hubeinrichtung verbunden ist.

33. Arbeitsvorrichtung nach Anspruch 32, **dadurch gekennzeichnet**, daß die Hubeinrichtung und die Mittel zur Druckerzeugung einen elektronisch gesteuerten Schrittmotor aufweisen.

## Claims

1. Working apparatus for milling machines for wood working, comprising a fixed vertical column (12) from which a horizontal swivel arm (20) protrudes to which pressure devices may be fastened and which may be adjusted in a horizontal plane and carries at its free end a vertical guide for said pressure device having means for producing a vertical pressure force, characterised in that said vertical guide is mounted to be freely shifted upward and downward, is provided with means for weight balancing the devices attached and is bearing at its lower end an adapter means (84) for interchangeably fastening guiding means, protecting means and pressure means, said adapter means (84) having a transversal guiding block (64) in which a supporting bar (68) for said interchangeable means is mounted for free horizontal shifting.

2. Working apparaturs according to claim 1, wherein said column (12) is further supporting a horizontal telescopic arm (156) which may be swivelled independently from said swivel arm (20) and which carries at its free end a vertically adjustable supporting rod (162) for fixing a guiding device (170) to be fastened to the machine table (10).

3. Working apparatus according to claim 2, wherein said supporting rod (162) is mounted at the free end of said telescopic arm (156) such that it may be vertically shifted by means of an eccentric element (166) having an actuating lever (168).

4. Working apparatus according to claim 2 or 3, wherein said telescopic arm (156) is fastened to a cantilever beam (158) protruding from the column (12) to which said beam is fixed by means of a ring (160) that may be rotated on the column (12).

5. Working apparatus according to anyone of claims 1 to 4, wherein said swivel arm (20) may be locked on the column (12) in a working position (A), in a workpiece changing position (C) and in a rest position (P).

6. Working apparatus according to anyone of the preceding claims, wherein said pressure producing means and/or said weight balancing means are provided with a motive spring (88) the initial tension of which is adjustable.

7. Working apparatus according to claim 6, wherein both motive springs (88) are coaxally mounted in a housing (48) at the free end of said swivel arm (20) and are coupled to a corresponding rotable cylinder (92), a traction cable (102) being wound on said cylinder (92) the free end of which cable is fixed to the vertical guide.

8. Working apparatus according to anyone of claims 1 to 7, wherein said vertical guide comprises two parallel guide bars (52) mounted, at the free end of said swivel arm (20), in ball guidances (50) such that they are free to be vertically shifted.

9. Working apparatus according to claim 8, wherein the upper ends of both bars (52) are connected by an end stop plate (54).

10. Working apparatus according to claim 8 or 9, wherein an adjustable stop ring (56) is fastened on one of said guide bars (52).

11. Working apparatus according to anyone of claims 1 to 10, wherein the transversal guiding block (64) is fastened with angular adjustment to a cantilever (60) protruding radially from the lower end of the vertical guide.

12. Working apparatus according to claim 11, wherein the supporting bar (68) may be locked in the transversal guiding block (64).

13. Working apparatus according to claim 11 or 12, wherein the transversal guiding block (64) is provided with retracting means adapted to automatically remove the supporting bar (68) and the devices fixed thereto from the milling position.

14. Working apparatus according to anyone of claims 11 to 13, wherein a stop ring (68) in adjustably mounted on the supporting bar (68).

15. Working apparatus according to anyone of claims 1 to 14, wherein a pressure shoe (104) and/or a guiding device (106) covering the workpiece (86) may be mounted at the supporting bar (68) by means of clamping elements (76, 78).

16. Working apparatus according to anyone of claims 1 to 14, wherein a friction type chucking tool (82) gripping the workpiece to be milled at a part of its length may be mounted at the supporting bar (68) by means of clamping elements (76, 78).

17. Working apparatus according to claim 16, wherein said chucking tool (82) hangs on a horizontal axis (120) to be shifted in a longitudinal guide (118) which is connected to the horizontal supporting bar (68) movably mounted in said transversal guiding block (64) in the direction towards the fence (18).

18. Working apparatus according to claim 17, wherein the longitudinal guide (118) for said chucking tool (82) is joined to the supporting bar (68) in such a way that its angular position is adjustable.

19. Working apparatus according to claim 17 or 18, wherein the longitudinal guide is mounted in a housing (118) provided with ball bearing guides adapted for a free shifting movement of the horizontal axis (120).

20. Working apparatus according to anyone of claims 17 to 19, wherein on said horizontal axis (120), at both sides of the longitudinal guide (118), stop rings (136) are adjustably mounted to limit the length to be milled.

21. Working apparatus according to anyone of claims 17 to 20, wherein said horizontal axis (120) is connected, by means of radially protruding joining elements (122, 122'), to a guiding bar (124) carrying two clamping jaws (126) for gripping the workpiece (86).

22. Working apparatus according to claim 21, wherein each of the clamping jaws (126) is provided with a vertical clamping surface (130) and a horizontal clamping surface (132).

23. Working apparatus according to anyone of claims 17 to 22, wherein to said horizontal axis (120) a handle (134) is fastened.

24. Working apparatus according to anyone of claims 1 to 14, wherein a cylindrical protective hood (110) for bow milling may be mounted onto the supporting bar (68) by means of clamping elements (76, 78).

25. Working apparatus according to claim 24, wherein said protective hood (110) has a milling opening (114) at its front side that may by partially covered by means of two protective walls (112) forming part of a cylinder which are mounted on said protective hood (110), from which they protrude downward, such that they may be freely rotated to each other on the whole circumference of the cylindrical hood (110) to uncover only the milling opening (114), while they are overlapping each other in a zone opposite to the milling opening (114), each oft the upper ends of said protective walls (112) being fastened to a corresponding ring (144) mounted on the outer surface of the hood (110) such that it may be rotated and vertically shifted.

26. Working apparatus according to claim 25, wherein the protective walls (112) are provided, in the zone opposite to the milling opening (114), with retracting means for adjusting a minimal milling opening (114).

27. Working apparatus according to claim 25 or 26, wherein a pressure ring (146) is provided at the lower edge of the cylindrical protective hood (110).

28. Working apparatus according to claim 27, wherein said pressure ring (146) is fastened to the upper end of the hood (110) by means of a yoke (148).

29. Working apparatus according to anyone of claims 24 to 28, wherein on the upper end of the protective hood (110) a clamping block (138) is fastened which is mounted on the supporting bar (68) of the transversal guiding block (64) such that it may be horizontally shifted.

30. Working apparatus according to claim 29, wherein an adjusting screw (150) is inserted into the clamping block (138), the free end of which may be locked in a bore of the transversal guiding block (64).

31. Working apparatus according to anyone of claims 24 to 30, wherein the protective hood (110) has a suction opening (154) to which a chip exhaust unit may be attached.

32. Working apparatus according to anyone of the preceding claims, wherein the vertical guide is coupled with a motor driven elevator.

33. Working apparatus according to claim 32, wherein the elevator and the pressure producing means are provided with an electronically controlled step motor.

## Revendications

1. Dispositif de travail pour machines à fraiser des pièces de bois, comprenant un bras orientable (20) pour la fixation d'organes de pression qui s'etend horizontalement sur une colonne verticale de support (12) fixe, et qui peut être déplacé dans un plan horizontal, l'extrémité libre du bras portant un guidage vertical pour ledit organ de pression, ledit guidage étant muni de moyens pour créer une force de pression verticale, caractérisé par le fait que le guidage vertical est monté de façon à être déplacé librement vers le haut et vers le bas, qu'il est muni de moyens d'équilibrage de poids des organes y étant fixés et qui porte à son extrémité inférieure un dispositif adaptateur (84) pour le montage interchangeable d'organes de guidage, d'organe de protection et d'organes de pression, ledit dispositif adaptateur (84) étant muni d'un bloc de guidage transversal (64) dans lequel est monté une barre de support (68) des dits organes librement déplaçable dans le sens horizontal.

2. Dispositif de travail selon la revendication 1, caractérisé par le fait que sur la colonne de support (12) est monté un bras télescopique horizontal supplémentaire (156), pivotable indépendamment du dit bras orientable (20), qui présente sur son extrémité libre une barre de support (162) d'un dispositif de guidage (170) à fixer sur la table de machine (10).

3. Dispositif de travail selon la revendication 2, caractérisé par le fait que la barre de support (162) est montée à l'extrémité libre du bras télescopique (156) au moyen d'un organe excentrique (166) actionné par un levier (168) et pouvant être déplacé dans le sens vertical.

4. Dispositif de travail selon la revendication 2 ou 3, caractérisé par le fait que le bras télescopique (156) est fixé à un bras (158) partant de ladite colonne de support (12) qui est relié à un anneau (160) monté pivotable sur la colonne (12).

5. Dispositif de travail selon une quelconque des revendications 1 à 4, caractérisé par le fait que le bras orientable (20) peut être arrêté sur la colonne de support (12) dans une position de travail (A), dans une position de changement de pièce (C) et dans une position de repos (P).

6. Dispositif de travail selon une quelconque des revendications précédentes, caractérisé par le fait que les moyens de pression et/ou les moyens d'équilibrage de poids sont munis d'un ressort-moteur (88) à tension initiale réglable.

7. Dispositif de travail selon la revendication 6, caractérisé par le fait que les deux ressorts-moteurs (88) sont montés de façon coaxiale l'un par rapport à l'autre dans un boîtier (48) logé à l'extrémité libre du bras orientable (20), chacun étant relié à un tambour tournant (92) autour duquel s'enroule un cordon de tirage (102) dont l'extrémité libre est reliée au guidage vertical.

8. Dispositif de travail selon une quelconque des revendications 1 à 7, caractérisé par le fait que le guidage vertical est constitué de deux barres de guidage parallèles (52) verticalement déplaçables sur des guidage à billes (50) et montées sur l'extrémité libre du bras orientable (20).

9. Dispositif de travail selon la revendication 8, caractérisé par le fait que les extrémités supérieures des deux barres de guidage (52) sont reliées par une plaque de fin de course (54).

10. Dispositif de travail selon la revendication 8 ou 9, caractérisé par le fait que sur une barre de guidage (52) est fixé un anneau d'arrêt réglable (56).

11. Dispositif de travail selon une quelconque des revendications 1 à 10, caractérisé par le fait que le bloc de guidage transversal (64) est fixé sur une console (60) avec ajustage angulaire, ladite console (60) s'étendant radialement à partir de l'extrémité inférieure du guidage vertical.

12. Dispositif de travail selon la revendication 11, caractérisé par le fait que la barre de support (68) peut être verrouillée sur le bloc de guidage transversal (64).

13. Dispositif de travail selon la revendication 11 ou 12, caractérisé par le fait que le bloc de guidage transversal (64) est muni de moyens de rappel pour le recul automatique de la position de fraisage de la barre de support (68) et des organes y étant fixés.

14. Dispositif de travail selon une quelconque des revendications 11 à 13, caractérisé par le fait que sur la barre de support (68) est fixé un anneau d'arret (72) réglable.

15. Dispositif de travail selon une quelconque des revendications 1 à 14, caractérisé par le fait que sur la barre de support (68) peut être monté, au moyen d'éléments des blocage (76, 78), un patin de pression (104) et/ou un organe de guidage (106) couvrant la pièce (86).

16. Dispositif de travail selon une quelconque des revendications 1 à 14, caractérisé par le fait que sur la barre de support (68) peut être monté au moyen d'éléments de blocage (76, 78) un dispositif de serrage (82) pour une fixation dynamique de la pièce (86).

17. Dispositif de travail selon la revendication 16, caractérisé par le fait que le dispositif de serrage (82) est suspendu à un axe horizontal (120) déplaçable dans un guidage longitudinal (118) relié à la barre de support horizontal (68), laquelle peut être déplacée dans le guidage transversal (64) vers la butée (18).

18. Dispositif de travail selon la revendication 17, caractérisé par le fait que le guidage longitudinal (118) du dit dispositif de serrage (82) est relié à la barre de support (68) avec ajustage angulaire.

19. Dispositif de travail selon la revendication 17 ou 18, caractérisé par le fait que le guidage longitudinal est logé dans un boîtier (118) qui porte des guidages à billes pour le déplacement libre du dit axe horizontal (120).

20. Dispositif de travail selon une quelconque des revendications 17 à 19, caractérisé par le fait que de chaque côté du guidage longitudinal (118) sur l'axe horizontal (120) sont montés des anneaux d'arrêt réglables (136) pour limiter la longueur du fraisage arrêté.

21. Dispositif de travail selon une quelconque des revendications 17 à 20, caractérisé par le fait que l'axe horizontal (120) est relié, par des éléments de liaison (122, 122') s'étendant radialement, à un rail de guidage (124) pour deux mâchoires de serrage (126) de la pièce (86).

22. Dispositif de travail selon la revendication 21, caractérisé par le fait que chacune des deux mâchoires de serrage (126) présente une surface de serrage verticale (130) et une surface de serrage horizontale (132).

23. Dispositif de travail selon une quelconque des revendications 17 à 22, caractérisé par le fait que l'axe horizontal (120) est relié à une poignée (134).

24. Dispositif de travail selon une quelconque des revendications 1 à 14, caractérisé par le fait que sur la barre de support (68) peut être monté, au moyen des éléments de blocage (76, 78), un capot protecteur cylindrique (110) pour le fraisage à l'arbre.

25. Dispositif de travail selon la revendication 24, caractérisé par le fait que le capot protecteur (110) présente une ouverture antérieure de fraisage (114) qui peut être partiellement obturée par deux parois de protection (112) formant une partie de cylindre qui sont montées sur le capot (110), qui forment saillie vers le bas, qui peuvent être déplacées librement et indépendamment l'une de l'autre sur toute la circonférence du capot (110) pour laisser l'ouverture (114) nécessaire au fraisage, passant l'une sur l'autre du côte opposé à l'ouverture de fraisage (114), l'extrémité supérieure de chacune des deux parois (112) étant fixée à un anneau (144) monté sur la face extérieure du capot cylindrique (110) de façon pivotable et verticalment déplaçable.

26. Dispositif de travail selon la revendication 25, caractérisé par le fait que les parois de protection (112) sont munies, sur le côté opposé à l'ouverture de fraisage (114), de moyens de recul pour le réglage d'une ouverture minimale de fraisage (114).

27. Dispositif de travail selon la revendication 25 ou 26, caractérisé par le fait que sur le bord inférieur du capot cylindrique (110) est prévu un anneau de pression (146).

28. Dispositif de travail selon la revendication 27, caractérisé par le fait que l'anneau de pression (146) est fixé sur le dessus du capot protecteur (110) au moyen d'un étrier (148).

29. Dispositif de travail selon une quelconque des revendications 24 à 28, caractérisé par le fait que sur la face supérieure du capot protecteur (110) est fixé un bloc de serrage (138) qui peut être déplacé horizontalement sur la barre de support (68) du bloc de guidage transversal (64).

30. Dispositif de travail selon la revendication 29, caractérisé par le fait que dans le bloc des serrage (138) est déplaçable une vis de réglage (150) dont l'extrémité libre peut être fixée dans un alésage du bloc de guidage transversal (64).

31. Dispositif de travail selon une quelconque des revendications 24 à 30, caractérisé par le fait que le capot protecteur (110) présente une ouverture d'aspiration (154) pour le raccordement à un dispositif d'aspiration des copeaux.

32. Dispositif de travail selon une quelconque des revendications précédentes, caractérisé par le fait que le guidage vertical est relié à un dispositif d'élévation à moteur.

33. Dispositif de travail selon la revendication 32, caractérisé par le fait que le dispositif d'élévation et les moyens de pression sont munis d'un moteur pas a pas à commande électronique.
